Europäisches Patentamt

European Patent Office

Office européen des brevets

(19)

(11) Publication number: 0 392 767 A2

# (12) EUROPEAN PATENT APPLICATION

(21) Application number: 90303773.7

(22) Date of filing: 09.04.90

(51) Int. Cl.⁵: C08F 285/00, C09D 151/00

(30) Priority: 11.04.89 US 336199

(43) Date of publication of application:
17.10.90 Bulletin 90/42

(84) Designated Contracting States:
AT BE CH DE DK ES FR GB GR IT LI LU NL SE

(71) Applicant: ROHM AND HAAS COMPANY
Independence Mall West
Philadelphia Pennsylvania 19105(US)

(72) Inventor: Makower, Samuel Jack
8301 High School Road
Elkins Park, Pennsylvania 19117(US)
Inventor: Koller, Snr. Robert Dene
688 Sourwood Drive
Hatfield, Pennsylvania 19440(US)
Inventor: Winey, Donald Alfred
358 Rettop Place
Warminster, Pennsylvania 18974(US)

(74) Representative: Angell, David Whilton et al
ROHM AND HAAS (UK) LTD. European
Operations Patent Department Lennig House
2 Mason's Avenue
Croydon CR9 3NB(GB)

(54) Thermoplastic acrylic elastomers.

(57) An improvement to two phase thermoplastic elastomer polymers comprising a final thermoplastic phase is disclosed. The polymers are useful in coatings, mastics, caulks, adhesives and articles, and comprises

(a) a linear, or lightly crosslinked, polymeric phase, formed from at least one $\alpha,\beta$-ethylenically unsaturated monomer of which no more than two percent by weight is multi-ethylenically unsaturated monomer, and

(b) a further polymeric phase in the form of discrete domains of from 2 to 50 nanometers in diameter dispersed within phase, (a), said further phase comprising polymer comprising units of at least one ethylenically unsaturated monomer which itself comprises at least 5, preferably at least 50 and more preferably 100 percent by weight of monomer having at least two sites of ethylenic unsaturation, the weight ratio of solids in said further phase to total solids in both phases being from 1:100 to 1:2; characterised in that

(c) the composition also contains subsequent polymeric phase which is thermoplastic and has a glass transition temperature higher than that of phase (a) and at least a portion of which subsequent phase is intimately attached to at least one of phases (a) and (b).

# THERMOPLASTIC ACRYLIC ELASTOMERS

This invention is concerned with polymeric compositions which have a novel combination of polymeric phases and offer an attractive balance of properties,I thereby giving them broad utility. One aspect of the invention relates to aqueous dispersions of novel water-insoluble latex polymer and to compositions prepared using these dispersions. This novel, modified, latex polymer produces films which are useful as binders for coatings for leather and polyurethane foam and other substrates, and which show improved toughness, hardness and tensile strength while retaining substantial extensibility. The latex may be processed to produce cellular polymeric foams or coagulated to produce elastomeric gumstock which may be molded into articles or extruded as sheet for roll roofing membrane or protective wrap and related applications. The latex polymer when coagulated may also be blended with other thermoplastic or thermosettable matrix polymer to improve their physical properties. Thus this invention also has relevance to the synthetic polymeric coatings art, particularly the elastomeric and semi-elastomeric coatings arts and also to the thermoplastic elastomer art.

In all of the above arts, means have been sought to improve the balance of properties over those achievable by conventional single-phase copolymerization of unsaturated monomers, or from blends of such copolymers. One such method studied for many years has been the multi-phase polymerization of copolymers, each phase having a different composition from the previously-formed phase, each phase polymerized in the presence of the previous phase, and often each phase chemically joined or partially chemically joined to the preceding phase or phases. Such staged polymerisation is most conveniently carried out by means of emulsion polymerization.

Multi-phased emulsion polymers have been known for many years, e.g. Ryan, US-A-3,562,235, as has been their use as films and laminates when isolated from emulsion, often with further processing into solid forms. Use of acrylic polymers supplied as latices as incorporated into aqueous-based mastics, caulks, and adhesives is well known. EP-A-187,505, teaches a means for preparing an aqueous dispersion comprising the first two phases of the present composition, the two-phase composition containing discrete domains of small particle size, and the utility of such polymers upon application of the dispersion or isolation of the polymer from the dispersion in most of the end uses contemplated for the present polymer. However, this does not teach or suggest a third hard phase, much less the improvement in properties resulting therefrom. Falk, US-A-4473679, teaches a three-phase polymer having a rigid core, a rubbery acrylic shell, and a transition layer intermediate between core and shell layers and formed of the core and shell monomer components, and having excellent elastomeric properties while maintaining the ability to be processed by conventional thermoplastic technology. They do not teach the sequence of additions in the present invention, nor do they teach the advantage of the very highly crosslinked second phase.

Sugii et al., Japanese Kokai 60-92372 teach a polymer useful as an improved pressure sensitive adhesive by first polymerizing a (meth)acrylic polymer which produces a tacky material, adding a monomer mixture enriched in a multifunctional monomer, along with an organic peroxide, to swell the particles and conducting the polymerization of the second monomers at an elevated temperature. There is no suggestion or exemplification of the additional polymerization of a third thermoplastic phase.

Several patents assigned to Dow (Makati et al, US-A-4,717,750 and U.S-A-4,742,108; Lee, US-4,569,964) teach reinforced latex particle structures. The Makati et al. patents each a second phase of glass temperature higher than either the first or third phase, which is not a restriction of the present invention. They especially do not teach the swelling methods and the use of high levels of multifunctional monomer in the second phase, and so do not obtain the discrete domain structure of the present invention. Hofmann, US-A-4,180,529, teaches a four-phased emulsion polymer having a non-elastomeric second phase which may contain up to 5% of a crosslinking monomer in combination with a elastomeric first phase. Owens, US-A-3,793,402 teaches a similar staging with an additional thermoplastic outerphase. Neither patent teaches that the crosslinked second or intermediate phase is present as domains, and their experimental procedures do not teach how to accomplish formation of small domains.

The present invention provides a polymeric composition comprising

(a) a linear or lightly crosslinked polymeric phase, formed from at least one $\alpha,\beta$-ethylenically unsaturated monomer of which no more than two percent by weight is multi-ethylenically unsaturated monomer, and

(b) a further polymeric phase in the form of discrete domains of from 2 to 50 nanometers diameter dispersed within phase (a), said further phase comprising polymer comprising units of at least one ethylenically unsaturated monomer itself comprising at least 5, preferably at least 50 and more preferably 100 percent by weight of monomer having at least two sites of ethylenic unsaturation, the weight ratio of solids in phase (b) to total solids in both phases being from 1:100 to 1:2; in both phases being from 1:100 to 1:2;

c) characterised in that the composition also contains subsequent polymeric phase which is thermoplastic and has a glass transition temperature higher than that of phase (a) and at least a portion of which subsequent phase is intimately attached to at least one of phases (a) and (b).

Thus, in short, what is provided is a polymer comprising a combination of polymeric phases, comprising a substantially linear initial phase, a crosslinked phase existing as small domains within the initial phase, and a thermoplastic phase which has a higher glass temperature than the initial phase. Such polymers are most conveniently prepared by multiphase emulsion polymerization, so that there is obtained an aqueous dispersion of an emulsion polymer having the combination of phases given above, the initial phase being of "soft" polymer and the final phase having at least a portion intimately attached to one or both of the initial and crosslinked phases. As is broadly known to those knowledgeable in the technology of multi-phase emulsion polymers, the presence of an outer harder phase would be expected to increase modulus, lower elongation and raise the temperature at which the multi-phased polymer exhibits toughness. Outer phases are generally applied either to aid in the isolation of the soft polymer or to act as an interface when the soft polymer is blended with a third polymer of differing chemical composition.

An alternative terminology found in the pertinent literature is that of core, shell, and intermediate phases, layers, or stages. In the present invention, the phase (a) ("first" or "initial" phase hereinafter) is essentially equivalent to the core, although the presence of a further phase in the form of a bead at the centre of this core phase is not excluded by the scope of the present invention. The phase (b) ("second" phase) is equivalent to the intermediate stage, and phase (c) ("third", "final" or "outer" phase) to the shell.

It has been found that addition of the third thermoplastic phase to the class of polymers described by EP-A-187505 results in an attractive balance of modulus, elongation, and glass or service temperature relative to the corresponding two-phase polymers. It has further been found that isolated polymers containing up to about 15% of third phase thermoplastic polymer have more attractive melt rheological properties than their two-phase analogs, that is, they generate less work-related heat when isolated by coagulation-extrusion on a twin-screw contra-rotating tangential extruder (in the barrel section after water is removed), or when reprocessed on a single-screw extruder or when compounded in an intensive mixing apparatus.

The phases (a) and (b) above are disclosed in EP-A-187505, which also describes a process for producing an improved water-insoluble latex polymer comprising

(a) preparing by emulsion polymerization an aqueous dispersion of a water-insoluble latex polymer of at least one ethylenically unsaturated monomer, which ethylenically unsaturated monomer comprises no more than about two percent by weight, based on the total weight of said ethylenically unsaturated monomer, of multi-alpha, beta-ethylenically unsaturated monomer and which water-insoluble latex polymer otherwise contains substantially no sites of ethylenic unsaturation,

(b) dispersing in said aqueous dispersion additional ethylenically unsaturated monomer comprising at least one monomer having at least two sites of alpha, beta-ethylenic unsaturation, whereby said additional monomer swells said latex polymer, and

(c) polymerizing the additional monomer within said monomer-swollen latex polymer. In the process of the present invention, the additional monomer when polymerised comprises about 1 to 33 percent by weight of the intermediate latex polymer resulting from step (c). The present invention further comprises the steps of adding to said intermediate latex polymer alpha, beta-ethylenically unsaturated monomer containing no more that 0.5 weight percent of multi-ethylenically unsaturated monomer, and polymerising it under conditions such that substantially no new polymer particles are formed, to obtain a final water-insoluble aqueous dispersion.

In the present invention, it is preferred, for reasons of weatherability, resistance to air-ageing, and the like, to polymerize the first dispersion or phase from an ethylenically unsaturated monomer mixture which is mainly an alkyl ($C_1$ -$C_{12}$) and preferably a lower ($C_2$ to $C_4$) lower alkyl acrylate. It is especially preferred to utilize n-butyl acrylate as the lower alkyl acrylate, and to copolymerize the butyl acrylate with up to about 50 parts of an alkyl methacrylate, preferably a lower alkyl methacrylate, such as methyl methacrylate, ethyl methacrylate, or butyl methacrylate. It is especially preferred to utilize n-butyl methacrylate as the co-monomer. The first phase polymer preferably has a glass temperature below about +20°C, more preferably below -10°C, and most preferably below about -30°C.

Useful co-monomers in the first phase are carboxylic acid monomers, which may comprise from about 1 to about 10 weight percent of the mers of the first polymeric phase. Such acids may include acrylic acid, methacrylic acid, itaconic acid, b-acryloxypropionic acid, and the like. A low level not exceeding about 2 weight percent, of mers of a multi-ethylenically unsaturated monomer, such as butylene glycol dimethacrylate, divinylbenzene, allyl methacrylate, diallyl maleate, and the like, may be present in the initial phase.

Other monomers which may be present include vinyl esters of saturated acids, such as vinyl acetate, vinyl aromatics, such as styrene, unsaturated nitriles, such as methacrylonitrile or acrylonitrile, and the like.

This initial phase is generally from about 99% to about 50% of the total multi-phase polymer. This phase may contain other monovinylidene monomers and may contain low levels of multi-vinyl monomers. EP-A-187505 discloses that any of several emulsion polymerization methods may be used.

The second phase, which is generally from about 0.5% to about 33% of the total multi-phase polymer, is present in discrete small domains. It is polymerized from a monomer mixture containing at least about 5% of a multi-functional monomer, and is preferably mainly or totally multi-functional monomer. The multi-functional monomer should be quite insoluble in water, as should any mono-functional co-monomer. A suitable solubility measurement is less than 0.2 grams of monomer(s) in 100 grams of water.

A preferred way of preparing these domains is by swelling the first latex with the second monomer or monomers prior to initiation of polymerization. Preferred monomers having two or more sites of unsaturation are acrylic or methacrylic esters of multi-functional alcohols, such as ethylene glycol dimethacrylate, propylene glycol dimethacrylate, 1,4-butylene glycol diacrylate, trimethylolpropane trimethacrylate, trimethylolpropane triacrylate, trimethylolethane trimethacrylate, and the like. Especially preferred is 1,3-butylene glycol dimethacrylate. The domains formed are from about 2 to about 50 nanometers in diameter, as determined by electron microscopy.

The final phase of the multi-phase polymer is a thermoplastic polymer, and is at least partially intimately attached to one or both of the first two phases. By thermoplastic is meant that the polymer, if prepared in the absence of the initial phases, would be capable of flow under heat and pressure, so that it would not be crosslinked or thermoset. It is preferable that the final phase polymer encapsulate or partially encapsulate the initial and second phases; for this reason, polymers of lower alkyl methacrylate, and especially polymers comprised mainly (above about 50%) of methyl methacrylate units are preferred. Co-monomers, such as alkyl acrylate, acrylonitrile, methacrylonitrile, styrene, and the like may be present, as may be monomers imparting functional groups, such as carboxyl,propyltrimethoxysilyl, amino, hydroxyl, glycidyl, and the like. Preferred functionalized monomers are acrylic acid, methacrylic acid, or acryloxypropionic acid, in amounts up to about 5% of the third phase monomer mixture. Also preferred are monomers bearing ureido functionality for promoting adhesion to metal, wood, glass, or polymeric substrates, such as those taught in US-A-2,881,155 or 2,881,171. Also preferred are monomers having reactive silicon functionality, such as from about 0.1 to about 3% methacryloxypropyltrimethoxysilane.

For many uses, however, such as in thermoplastic elastomers, such functionalization is not required. Preferred are polymers containing at least 50% of mers of lower alkyl methacrylates. Especially preferred are polymers containing at least 80% methyl methacrylate units.

Polymerization conditions are employed, such as low levels of emulsifiers, control of rates of monomer addition, and the like, to prevent formation of new polymer particles.

For ease of isolation and reinforcement of the rubbery structure, among other structural reasons, the glass temperature of the final polymerized phase must be greater than that of the initial polymer phase, preferably by at least about 20°C. The final phase is from about 1 to about 33% by weight of the total polymeric phases, preferably from 1 to 15%.

The final phase may be prepared in emulsion utilizing the emulsifiers, initiators, etc. disclosed in EP-A-187505. It is preferred to avoid additional emulsifier, so as to mitigate the formation of free polymer particles not intimately attached to the initial phases.

Intimately attached polymer can be judged by the extent of soluble polymer of the final phase which can be separated by selective solvent extraction from the overall multiphase polymer. This separation can be conducted with appropriate solvent separation and centrifugation techniques and analysis of the isolated polymers by means such as pyrolysis of the separated polymers. Thus, monomers may be emulsified with an anionic, cationic or nonionic dispersing agent, using for example from about 0.05% to 10% by weight of dispersing agent on the weight of total monomers. Combinations of anionic and nonionic emulsifiers may also be used. High molecular weight polymers such as hydroxyethyl cellulose, methyl cellulose and polyvinyl alcohol may be used as emulsion stabilizers and protective colloids, as may polyelectrolytes such as polyacrylic acid. Acidic monomers, particularly those of low molecular weight, such as acrylic and methacrylic acid, are water-soluble, and thus may serve as dispersing agents which aid in emulsifying the other monomers used.

Suitable cationic dispersion agents include lauryl-pyridinium chlorides, cetyldimethyl amine acetate, and alkyldimethylbenzylammonium chlorides in which the alkyl group has from 8 to 18 carbon atoms.

Suitable anionic dispersing agents include, for example, the higher fatty alcohol sulfates, such as sodium lauryl sulfate, and the like; alkylaryl sulfonates such as sodium or potassium isopropylbenzene sulfonates or isopropyl naphthalene sulfonates, and the like; alkali metal higher alkyl sulfosuccinates, such as sodium octyl sulfosuccinate, sodium N-methyl, N-palmitoyltaurate, sodium oleyl isothionate, and the like; and alkali metal salts of alkylarylpolyethoxyethanol sulfates or sulfonates, such as sodium tert-octylphenoxypolyethoxyethyl sulfate having 1 to 5 oxyethylene units, and the like.

Suitable non-ionic dispersing agents include alkylphenoxypolyethoxyethanols having alkyl groups of from about 7 to 18 carbon atoms and from about 6 to about 60 oxyethylene units, such as heptylphenoxypolyethoxyethanols, methyloctylphenoxypolyethoxyethanols, and the like; polyethoxyethanol derivatives of methylene-linked alkyl phenols; sulfur-containing agents such as those made by condensing from about 6 to about 60 moles of ethylene oxide with nonyl mercaptan, dodecyl mercaptan, and the like, or with alkylthiophenols wherein the alkyl groups contain from 6 to 16 carbon atoms; ethylene oxide derivatives of long-chained carboxylic acids, such as lauric acid, myristic acid, palmitic acid, oleic acid, and the like, or mixtures of acids such as those found in tall oil containing from 6 to 60 oxyethylene units per molecule; analogous ethylene oxide condensates of long-chained alcohols such as octyl, decyl, lauryl, or cetyl alcohols, ethylene oxide derivative of etherified or esterified polyhydroxy compounds having a hydrophobic hydrocarbon chain, such as sorbitan monostearate containing from 6 to 60 oxyethylene units; also, ethylene oxide condensates of long-chain or branched chain amines, such as dodecyl amine, hexadecyl amine, and octadecyl amine, containing from 6 to 60 oxyethylene units; block copolymers of ethylene oxide sections combined with one or more hydrophobic propylene oxide sections. Mixtures of alkyl benzenesulfonates and ethoxylated alkylphenols may be employed.

A polymerization initiator of the free radical type, such as ammonium or potassium persulfate, may be used alone or as the oxidizing component of a redox system, which also includes a reducing component such as potassium metabisulfite, sodium thiosulfate or sodium formaldehyde sulfoxylate. The reducing component is frequently referred to as an accelerator. The initiator and accelerator, commonly referred to as catalyst, catalyst system or redox system, may be used in proportion from about 0.01% or less to 3% each, based on the weight of monomers to be copolymerized. Examples of redox catalyst systems include t -butyl hydroperoxide/sodium formaldehyde sulfoxylate/Fe(II), and ammonium persulfate/sodium bisulfite/sodium hydrosulfite/Fe(II). The polymerization temperature may be from room temperature to 90°C, or more, and may be optimized for the catalyst system employed, as is conventional. Emulsion polymerization may be seeded or unseeded. Seeded polymerization is preferred and tends to yield aqueous dispersions of latex polymer having more uniform physical properties than unseeded polymerization.

The polymerization process may be a thermal or redox type; that is, free radicals may be generated solely by the thermal dissociation of an initiator species or a redox system may be used. A monomer emulsion containing all or some portion of the monomers to be polymerized may be prepared using the monomers, water and emulsifiers. A catalyst solution containing catalyst in water may be separately prepared. The monomer emulsion and catalyst solution may be co-fed into the polymerization vessel over the course of the emulsion polymerization. The reaction vessel itself may initially contain water. The reaction vessel may also additionally contain seed emulsion and further may additionally contain an initial charge of polymerization catalyst. The temperature of the reaction vessel during the emulsion polymerization may be controlled by cooling to remove heat generated by the polymerization reaction or by heating the reaction vessel. Several monomer emulsions may be simultaneously co-fed into the reaction vessel. When multiple monomer emulsions are co-fed, they may be of different monomer composition. The sequence and rates at which the various monomer emulsions are co-fed may be altered during the emulsion polymerization process. After addition of the monomer emulsion or emulsions has been completed, the polymerization reaction mixture may be chased to minimize the concentrations of unreacted monomer and unreacted polymerization catalyst species. The pH of the contents of the reaction vessel may also be altered during the course of the emulsion polymerization process. Both thermal and redox polymerization processes may be employed.

The molecular weight of the final phase may be regulated by additives known as "chain transfer agents", such as thioglycolic esters, mercaptopropionate esters, mercaptopropionic acids, alkyl mercaptans, and the like. If utilized, a preferred range is from about 0.05 to about 0.3% based on the weight of the monomers of the final phase. Intermediate phases may be present in the present invention.

Polymers of the present invention may exhibit utility when formulated directly from emulsion into coatings, caulks, mastics, and the like. They may also isolated from the emulsion in solid form.

The latex polymers of the present invention may be separated from the aqueous medium in which they are polymerized by coagulation, either in batch or continuously, followed by additional steps, such as decantation, filtration, et al. to dewater the coagulated latex polymer. Coagulation may be induced mechanically as by shearing, by the admixing of coagulation agents such as salts or weak acids, by the application of high temperature, by freezing, or by a combination of such techniques. The multi-phase polymers of the present invention appear to yield dried polymers with less tendency to adhere to each other than similar two-phase polymers of Frankel et al., allowing for ease in handling the resulting solid.

Latex polymers of the present invention may be continuously coagulated and dewatered by means of the equipment and process described in US-A-3,751,527, line 58 of column 7 to line 15 of column 9, inclusive. Polymer which is extruded through the exit die therein disclosed is collected as gumstock and may be further modified and/or processed in the same manner as is typical of other elastomeric materials. For example, processing may be by molding into shaped articles. This polymer, depending on the composition of the improved latex polymer, may be described as thermoplastic elastomer or thermoplastic semi-elastomer. Alternatively, the extruder outlet may be fitted with a sheet die and the products collected in sheet form by means of cooled takeoff rolls. An especially convenient sheet forming and takeoff system is described in U.S. 3,852,387. The general procedure of example 11 (beginning on line 40 of column 18) may be employed to collect the extrudate between oriented poly(ethylene terephthalate) (MYLAR* - Mylar is a trademark of DuPont de Nemours Company) films so that upon cooling, the polymers in sheet form may be easily stripped from the protective MYLAR film. A further useful refinement is the incorporation of reinforcing fibrous material into the sheets as they are formed. Chopped glass or synthetic ornamental fiber roving, fiberglass mat, and non-woven fabric mats and scrims may be pressed into the polymer extrudates as they are formed into sheet by the action of the rolls. It is convenient to feed such reinforcing materials from rolls mounted so as to provide said reinforcing materials as continuous bands. Again, protective films may be employed to facilitate sheet formation and subsequent handling of the reinforced elastomeric sheets. Alternatively, one or both of the surfaces of the formed sheets may be welded to the film surfaces. In these cases the films may be knitted or woven fabrics, patterned and/or decorated films, and the like. The formed sheet products may be wound on spools as continuous sheet or cut to length and/or width on or off line. These extruded, reinforced and/or surface-capped materials also may be patterned on top and/or bottom surfaces by means of rolls which carry suitable embossing patterns. They also may be collected as shaped profiles for yet other applications. These materials also may be collected as high or low density foams by addition of chemical foaming agents or of foaming gases at an additive port of the type shown in Figure 8 of US-A-3,751,527 interposed between vent section 7 and the die section E shown in Figure 7 of said patent.

The gumstock, sheet and profile products have a wide range of applications. The gumstocks may be compression, transfer, or injection molded, with or without the addition of crosslinking agents, to give shaped objects such as shoe heels, shoe soles, shrouds for automobile coil springs, "O" rings, gaskets and the like. Extruded sheet materials may be used as resilient matting, roll roofing membranes, tough, resilient, protective wraps, elastomeric layers for laminated structural materials, bumper strips and the like. Extruded, reinforced sheet materials have somewhat similar uses and are especially useful in roll roofing applications. Foamed sheet is useful in elastomeric insulating and shock absorbing applications. Fabric surfaced sheet is useful in carpeting and upholstery applications, among others. Fabric surfaced, foamed sheet is useful in many applications, including carpeting, and upholstery, but also for automobile headliners and in other areas in which its decorative, sound deadening and shock-absorbing properties are exploitable. Profiles are useful in weatherproofing and sealing applications, among others.

The polymers may be combined with fillers, both reinforcing and non-reinforcing, such as mica, talc, silica, alumina, calcium carbonate, titanium dioxide, glass fibers, hollow glass beads, and the like, up to about a 300 weight percent loading. The polymers may be stabilized with specific light and heat stabilizers known to the art. Such light stabilizers include aryl salicylates, hydroxybenzophenones, benzotriazoles, hindered amines, and the like. From about 0.005 weight percent to about one weight percent on polymer is the preferred range.

Heat stabilizers, sometimes referred to as antioxidants, may be used at levels from about 0.1 weight percent to about 2 weight percent; useful classes of materials include 2,6-disubstituted hindered phenols, organic disulfides, dithioesters, epoxidized oils, and the like.

The polymers are useful in a variety of coatings applications, wherein the polymer dispersion is applied to a substrate and dried. If applied in thick layers, it is useful in mastic (especially in toughened or more dirt-resistant mastics) and caulk applications, and may be combined onto appropriate porous, semi-porous or non-porous substrates.

The polymers in solid form may be re-heated and allowed to flow, usually as an extruded melt or film onto appropriate substrates, such as fabrics, plastics. The material may, depending on the end use, be used to bind the fabric or fibers, to act as a protective capstock, or as a flexible support for other films.

The polymers may be processed in an extruder, such as a twin-screw extruder, with an appropriate

6

blowing agent, such as azodicarbonamide, and extruded through a die and sizer to form flexible foamed profile, or the blowing agent may be combined with the polymer by low-temperature milling, the composite material cut and formed to shape, and then heated in a high temperature oven, such as to above about 200°C, to form a closed flexible foam. The extruder may be used for compounding and extrusion of sheet containing blowing agent, and then sheet the subsequently heated to form the closed foam.

Aqueous dispersions of latex polymer of the present invention may be used as adhesives, especially in applications in which tack may be sacrificed in favor of enhanced toughness, or the latex polymers may be used in preparing formulated adhesives, and coatings for leather and polyurethane foam as well. In addition, by selecting a monomer composition for the first phase which is characterized by an appropriate glass transition temperature, the modified latex polymer may be employed in preparing trade sales paint compositions and clear and pigmented wood coatings. In addition, the compositions of the present invention may be used in formulating water-based caulks and sealants.

When the compositions of the present invention are used as polymeric binders for water-based coatings, it may be necessary to add monomeric or polymeric plasticizer or coalescent to the coatings composition to promote film formation, if the glass transition temperature of the polymeric binder is not sufficiently below the temperature at which the fluid coating composition is applied to the substrate to be protected. Thus the invention may further provide a toughened polymeric binder for coatings comprising an aqueous dispersion of improved latex polymer prepared by the process disclosed herein and optional plasticizer sufficient to reduce the glass transition temperature of the improved latex polymer to less than, preferably at least 5°C, less than the temperature of application of the coating, provided that the glass transition temperature of the improved latex polymer is greater than the application temperature of the coating. The plasticizer may have a relatively high vapor pressure and may function as a fugitive coalescent. Preferred is Texanol (R), which is 2,2,4-trimethyl-1,3-pentanediol monoisobutyrate.

Similarly, an aqueous dispersion of latex polymer according to the invention may be used as an aqueous adhesive, or used as a polymeric binder in formulating adhesive compositions. When used as a toughened adhesive, the glass transition temperature of the latex polymer is preferably at least 5°C below the temperature of application of the adhesive. The use of aqueous dispersions of water-insoluble latex polymer in the formulation of water-based coatings for exterior applications, water-based coatings for leather and water-based adhesives is described in H. Warson, The Applications of Synthetic Resin Emulsions - (Ernest Benn Ltd, London 1972). The relative amount of latex polymer used in preparing coatings with the compositions of the present invention depends on the desired application. In general, the weight ratio of inorganic pigment to binder may be from 1/1 to about 5/1, preferably about 1/1 to 4/1. In the case of roof coatings (roof mastics), a pigment-to-binder ratio of from about 1/1 to 3/1 may be used with a ratio of about 1.5/1 preferred. It is desirable to maintain the pigment volume concentration below the critical pigment volume concentration, as is well known in the coatings art.

For aqueous latex based mastics, caulks, or sealants of the present invention, the total solids content may be from about 50% to about 90% by weight, preferably from about 60% to about 85%. Solids content is kept as high as possible while yet achieving a useful consistency.

As used herein, the word "pigment" denotes both inorganic materials which are used to impart aesthetic and functional qualities such as rutile and anatase titanium dioxide, and inorganic materials which are used to fill or extend the compositions, such as calcium carbonate ("fillers"), as well as organic materials such as aqueous dispersions of water insoluble polymers which yield air-filled voids on drying of the coating compositions where such voids may contribute to the hiding power of the coating by light scattering, and organic pigments which impart other functional and aesthetic properties to the composition, such as color and texture.

The pigments are present in an amount of from 10 percent to 90 percent by weight of the total solids in coatings composition depending upon the consistency desired, the presence or absence of thickening agents, the amount and identity of solvent utilized, and so forth. Suitable pigments include rutile and anatase titanium dioxide, calcite, limestone, mica, talc, asbestos fiber or powder, diatomaceous earth, barytes, alumina, slate flour, calcium silicate, clay, colloidal silica, magnesium carbonate, magnesium silicate, zinc oxide and so on. The amounts of solvent, if any, pigment, and polymer solids are such as to give caulking compositions a dough-like consistency. Roof mastics have a somewhat thinner consistency with viscosity approximately 80-120 K.U. (Krebs units).

The pigment used in preparing coatings with the compositions of this invention is dispersed using high speed dispersion equipment such as a Cowles disperser. Anionic polymer, such as polyacrylate or polyphosphate is used as a dispersing aid and in stabilizing the dispersion. Copolymers of acrylic acid and/or methacrylic acid with lower alkyl acrylates are preferred as dispersants. Potassium tripolyphosphate may also be used used to disperse the inorganic pigments. The amount of dispersant used depends on the surface area of the pigment employed per unit volume of the composition. The amount is easily determinable by those skilled in the coatings art by conventional techniques.

The anionic dispersants which may be used are anionically charged polymeric materials used to disperse the inorganic materials used to pigment or fill the coating, roof mastic, caulk or sealant compositions prepared with the aqueous dispersion of latex polymer of the present invention. Sodium tripolyphosphate (CAS Reg. No. 7758-29-4) is a preferred anionic dispersant as is potassium tripolyphosphate. Polyacrylates are also preferred dispersants, and the combination of polyacrylates and polyphosphates are especially preferred. Other types of "condensed" phosphates, that is, dehydrated polymerized orthophosphate in which the $H_2O$ to $P_2O_5$ ratio is less than 3 to 1, may be used. Sulfonated polymers, including naphthalene-formaldehyde sulfonated polycondensates, polymaleates, natural product-derived dispersants, such as tannins, lignins, alginates, gluconates, glucosides, organic phosphonates including methylene phosphonates, may be used. The particular type and amount of dispersant employed may depend on the pigment types and grades selected, and particular grades of certain pigments, for example, titanium dioxide, are available commercially in predispersed form.

Coating compositions prepared using aqueous dispersions of latex polymer of the present invention May be thickened using conventional coatings thickeners as desired. For example, cellulosic thickeners such as methyl cellulose and hydroxyethyl cellulose may be used. Other types of thickeners and rheology modifiers, such as associative hydrophobic alkali soluble emulsions may also be used. The amount of thickener employed depends on the type of coatings product to be prepared, the pigment/binder ratio of the composition, the type and grade of thickener used, the application technique to be used, etc.

Coatings compositions prepared using the present invention may also include conventional coatings ingredients such as can preservatives, antimicrobial agents, mildewcides, anti-freeze agents, coalescents, defoaming agents, colorants, dyes, cosolvents, plasticizers and adhesion promoters.

A variety of application techniques may be employed with coating compositions prepared with the present invention. To some extent, the application technique depends on the viscosity and rheology of the coating composition. The roof mastics of the present invention have a viscosity which is somewhat greater than exterior latex paints; roof mastics may be applied using an airless spray technique. Other techniques, such as application by brush, roller, electrostatic spray, etc., may also be used as appropriate. Caulks may be applied by gunning.

The selection of polymeric binders and other coatings components for leather coatings depends greatly on the intended use of the leather to be finished. Finishes for shoe leather require substantial flexibility and stretch, as the finished leather often must undergo severe mechanical stress and elevated temperature during shoe manufacture. The shoes themselves must withstand constant flexing over wide ranges of temperatures. The polymeric binder employed in a leather finish must remain soft and pliable despite the environmental extremes encountered. In addition, the leather finish must adhere well to the leather itself. In the case of leather basecoats, upon which additional finishing topcoats are applied, the material must adhere to both the leather itself and the topcoating finish. Leather basecoat formulations may contain optional plasticizer, thus the glass transition temperature of the binder polymer may be as high as about 70°C.

The improved water-insoluble latex polymers of the present invention may be employed as binders for leather topcoat and basecoat finishes.

Improved cellular foam coatings and molded articles may be prepared from aqueous dispersions of the latex polymer of the present invention by a process comprising

(1) foaming by high speed mechanical stirring or by use of a chemical blowing agent, a composition comprising an aqueous dispersion of latex polymer of the present invention, up to 200 percent by weight of inorganic filler such as clay, silica or titanium dioxide, based on the weight of solids of said latex polymer, and optional thickener, surfactant and foam stabilizer,

(2) drying said foamed composition.

The foamed composition may be applied as a coating and subsequently dried or the foamed composition may be molded into articles. Drying may occur at elevated temperature for relatively short periods (for example, at 100°C for 10 minutes or less) or at ambient temperatures for longer periods. Drying conditions depend on the article size, film thickness, etc. Dried foams may exhibit a smooth, soft feel and complete recovery when squeezed and the strength to stand alone, when cast onto a removable substrate such as release paper. Foams of the present invention are useful as thermal insulating materials when attached to fabric, as filtering media for either gaseous or liquid systems, and as sound-absorbing materials on walls, ceilings or interior surfaces of cabinets containing vibration or noise-emitting systems.

8

EXAMPLES

The examples are intended to illustrate the present invention and not to limit it except as it is limited by the claims. All percentages are by weight unless otherwise specified, and all reagents are of good commercial quality unless otherwise specified. All milling and molding for Examples 1-6 were performed at 172°C. The tensile and elongation measurements were performed according to ASTM-D-882; the Tg measurements were made according to ASTM-D-3418-75 on a Perkin-Elmer DSC-2.

Standard procedures are used to characterize the emulsions. Particle sizes are determined by a quasielastic light scattering technique using a Nano-Sizer* particle size analyzer manufactured by Coulter Electronics Inc. The procedures used to determine soluble fraction and gel swell ratio as given below.

The physical properties of films formed by the latex polymer itself in the absence of additives are believed to often be predictive of the properties of latex polymer-containing coating formulations. The latter may also contain substantial amounts and varieties of additional components such as inorgarvc pigments, colorants and other additives.

Films are cast and allowed to dry two weeks at ambient conditions before properties are determined. Surface tack is rated by touch. Shore A hardness is determined as described by the instrument manufacturer, Shore Instrument Co. of New York, New York. Multiple layers of cured polymer film may be necessary to permit meaningful measurement of Shore A hardness. The details of the tensile strength and elongation determinations are given below.

The soluble fraction and gel swell ratio are polymer characteristics which are determined using acetone as the solvent. A known weight of polymer (either as the emulsion or as the isolated polymer) is placed in a centrifuge tube along with about 50 times the polymer weight of acetone (e.g., 0.5 g. of polymer in 25 g. acetone in a 50 ml. tube). After shaking, usually overnight, the sample is centrifuged (20,000 rpm for 60-90 min.) to precipitate the insoluble gel. The clear supernate is removed and dried to determine soluble polymer. The gel is redispersed in acetone for at least 4-6 hours and centrifuged again. The clear supernate is removed and dried as before. If the second extraction gives more than about 5% soluble fraction, the extraction is repeated until less than about 5% is found in the supernate. The weights of the polymer in the soluble fractions are summed and the percent soluble fraction is calculated as (weight of soluble polymer/total polymer weight) X100.

Alter the last extraction, the weight of the acetone swollen gel is determined and the gel swell ratio calculated as weight of wet gel divided by (total polymer weight - soluble polymer weight).

EXAMPLE 1. (COMPARATIVE)

A two-phase polymer with five parts of a second cross-linked phase prepared in accordance with EP-A-187505 is compared to a three-phase polymer prepared in accordance with the present invention , and a comparative evaluation of the two materials.

A. Prior Art

A monomer emulsion was prepared of the following ingredients:

| Water | 435 g |
| Sodium lauryl sulfate (28%) | 27.7 g |
| Butyl acrylate | 1353.7 g |
| Acrylonitrile | 103.8 g |
| Methacrylic acid | 24.5 g |

This emulsion was added in 5 shots to a vessel containing 645 g water and was conducted at 50°C and polymerized using a redox system consisting of 2.28 g cumene hydroperoxide and 1.54 g sodium sulfoxylate formaldehyde. Alter completion of the reaction, 78 g of butyleneglycol dimethacrylate was added and polymerized with 1.0 g t-butylhydroperoxide and 0.5 g isoascorbic acid. A sample of the emulsion was

9

precipitated via freezing. The dried sample was milled and pressed into a 1/8" (0.32 cm.) sheet.


EXAMPLE 2. (INVENTION)


Preparation of a three-phase polymer with 15 parts of a hard outer phase (Tg of final phase ca. 57° C)

An emulsion was prepared in the same manner as in Example 1 except that a third phase was added consisting of 220.2 g methyl methacrylate and 55.1 g butyl acrylate and polymerized with 0.23 g sodium persulfate and 0.23 g sodium formaldehyde sulfoxylate. The precipitated and dried resin was milled and molded as in Example 1.

An Instron Tensile Tester was used to measure free-film mechanical properties. Films were cast in polypropylene petri dishes and allowed to dry at least two weeks. The film thickness was 0.09-0.10 cm. If required, films were frozen to separate from the dish and/or talc was applied to facilitate handling. A die was used to cut a dog-bone shaped sample having 0.64 cm. width in the thin area. The ends were wrapped with masking tape before being clamped in the Instron jaws.

The following parameters were used in the Instron tester

Crosshead speed: 2.54 cm./min.

Initial gap: 1.27 cm.

In general, samples were run in duplicate.

Data reported are:

Tensile (max.) - the highest strength observed

Elongation (break) - the elongation when the sample breaks

The following physical properties were obtained:

| | Tensile Max. kg/cm$^2$ | Elong. at break % | Tg °C |
|---|---|---|---|
| Example 1 (Comp) | 11.3 | 312 | -26 |
| Example 2 (Inv) | 46.6 | 720 | -24 |

These comparative data demonstrate the improvement in tensile strength and elongation at break at a constant Tg.


EXAMPLE 3. (COMPARATIVE)


A two-phase all-acrylic polymer with five parts of a highly crosslinked second phase

A 5-gallon reactor was charged with 8000 g water and heated to 55° C. A monomer emulsion was prepared in another vessel consisting of: 2250 g water, 390 g Siponate DS-4, 1596 g butyl acrylate, 7286.5 g butyl methacrylate and 142.5 g methacrylic acid. A seed was prepared in situ by adding 583 g of the monomer emulsion and initiating it with 5 g of a 1% aqueous solution of ferrous sulfate, followed by 100 g of a solution of 18 g sodium persulfate in 500 g water and 100 g of a solution of 15 g sodium bisulfite in 500 g water. After the exotherm, the remaining monomer emulsion was added gradually over ca. 2.5 hours together with the remaining solutions of the persulfate and bisulfite maintaining the reaction temperature at 65±3 ° C. A 30 min. hold followed the end of feeds, after which the reaction was cooled to 45° C and 475 g of butyleneglycol dimethacrylate was added followed by solutions of 3.4 g t-butylhydroperoxide in 50 g water and of 2.5 g isoascorbic acid in 50 g water. The reaction was held for 20 minutes after the reaction reached its peak. A sample was precipitated by freezing, washed and dried. The calculated Tg of the first-phase polymer was + 1° C.


EXAMPLE 4. (INVENTION)

A. A three-phase all-acrylic polymer with 15 parts of a hard outer phase.

A 5-gallon vessel was charged with 8000 g water and thoroughly deaerated. A monomer emulsion was prepared consisting of 2000 g water, 351.1 g Siponate DS-4, 2422.5 g butyl acrylate, 5531.4 g butyl methacrylate and 121.1 g methacrylic acid. The vessel was heated to 55 °C and a seed was prepared in situ by adding 520 g monomer emulsion and initiating it with 100 g of a solution of 16.15 g of sodium persulfate in 500 g water followed by 100 g of a solution of 13.75 g sodium bisulfite in 500 g water and 5 g of a 1% aqueous solution of ferrous sulfate. After the exotherm, the remaining monomer emulsion was added gradually over 2 hours together with the remaining solutions of sodium persulfate and sodium bisulfite. The reaction temperature was maintained at 65 ± 2 °C. A hold period of 30 min. followed the end of the feeds after which the reaction was cooled to 45 °C, 425 g of butyleneglycol dimethacrylate was added and initiated with solutions of 3 g t-butylhydroperoxide in 50 g water and 2.5 g isoascorbic acid in 50 g water. The reaction was kept for 30 minutes after which 1200 g methyl methacrylate and 300 g butyl acrylate was added and initiated with solutions of 1.5 g sodium persulfate in 75 g water and of 1.25 g sodium formaldehyde sulfoxylate in 75 g water. After a hold of 30 minutes, a sample was precipitated by freezing, washed and dried. The glass temperature of the first-phase polymer was calculated as -9 °C. It was noted that films from polymers containing butyl methacrylate in the first phase were less prone to exhibit whitening on exposure to water at temperatures of 70∞ or above.

B. The samples of Examples 3 & 4 were milled and molded into 1/8" sheets and the following physical properties were obtained:

|  | Tensile kg/cm$^2$ | Elong. at Break % | Tg °C |
|---|---|---|---|
| Example 3 (Comp.) | 91.0 | 325 | 18 |
| Example 4 (Inv.) | 85.2 | 318 | 6 |

These comparative data demonstrate improved Tg, i.e., lower, at constant Tensile and Elongation at break properties.

EXAMPLE 5 and 6

Examples 5 and 6 demonstrate that the use of the third phase allows one to improve both tensile strength and and lower the glass temperature of the multi-phased polymer.

EXAMPLE 5 (COMPARATIVE)

A monomer emulsion was prepared consisting of 2241 g water, 64.8 g Siponate DS-10, 5265 g butyl acrylate, 2673 g methyl methacrylate and 162 g of methacrylic acid. A reaction vessel containing 6840 g water was deaerated and a solution of 16.2 g Siponate DS-10 in 54 g water was added. The vessel was heated to 55 C, 728 g of monomer emulsion was placed in the reactor and initiated with 90 g of a solution of 16.2 g sodium persulfate in 630 g water, 90 g of a solution of 13.5 g sodium bisulfite in 630 g water and 13 g of a 1% aqueous solution of ferrous sulfate. After the exotherm, the remaining monomer emulsion was added gradually over a 3 hours period together with the remaining solutions of sodium persulfate and sodium bisulfite maintaining the reaction temperature at 65 -2 °C. A 1/2 hour hold followed the end of feeds after which the reactor was cooled to 45 °C, 426 g of butyleneglycol dimethacrylate was added and initiated with solutions of 3 g t-butylhydroperoxide in 45 g water and of 2.2 g isoascorbic acid in 45 g water. After a 1/2 hour hold, the reaction was cooled. A sample was precipitated by freezing, washed and dried.

EXAMPLE 6 (INVENTION)

A monomer emulsion was prepared consisting of 2000 g water, 351 g Siponate DS-4, 5650 g butyl acrylate, 2301 g methyl methacrylate and 121 g methacrylic acid. A reaction vessel containing 8000 g water was deaerated with a nitrogen sparge, heated to 55°C and 520 g monomer emulsion was added. It was initiated with 100 g solutions of each, 16.2 g sodium persulfate in 500 g water, 13.7 g sodium bisulfite in 500 g water and with 5 g of a 1% aqueous solution of ferrous sulfate. After the exotherm, the remaining monomer emulsion, persulfate and bisulfite solutions were added gradually over a 2.5 hours period maintaining a reaction temperature of 65 ±2°C A 1/2 hour hold followed the end of the feeds. The reaction was cooled to 45°C, 425 g of butyleneglycol dimethacrylate was added and initiated with solutions of 3 g t-butylhydroperoxide in 50 g water and of 2.2 g isoascorbic acid in 50 g water. After a hold of 30 minutes, 1200 g methyl methacrylate and 300 g butyl acrylate was added and initiated with aqueous solutions of 1.5 g sodium persulfate and of 1.25 g sodium formaldehyde sulfoxylate. After 30 minutes, the reaction was cooled, a sample was precipitated by freezing, washed and dried. The samples of examples 5 & 6 were milled and molded and the following physical properties were obtained:

|  | Tensile,kg/cm$^2$ | Elong. at break, % | Tg, °C |
|---|---|---|---|
| Example 5 (Comp) | 54.5 | 535 | 4 |
| Example 6 (Inv) | 82.3 | 450 | -3 |

## EXAMPLE 7 (COMPARATIVE)

The teachings of Example 1 were followed to prepare an emulsion of the composition butyl acrylate/ acrylonitrile/ acrylic acid = 91.6/7/1.4. The reaction was concluded prior to the addition of any crosslinking monomer. The particle size in Examples 7-10 was set by the addition to the initial aqueous phase of 64 g of a 45% solids seed polymer; said seed polymer was approximately methyl methacrylate/butyl acrylate/methacrylic acid 49/50/1 and of particle size ca. 100 nanometers.

## EXAMPLE 8 (COMPARATIVE)

The teachings of Example 1 were followed to prepare a two-phase polymer of the composition butyl acrylate/ acrylonitrile/ acrylic acid//butylene glycol dimethacrylate = 97(91.6/7/1.4)//3.

## EXAMPLE 9 (COMPARATIVE)

The emulsion of Example 7 (400 parts, 59.7% solids) was further reacted by addition of a monomer emulsion of:

| Butyl acrylate | 21.1 parts |
|---|---|
| Methyl methacrylate | 20 |
| Methacrylic acid | 1.05 |
| Siponate DS-4 anionic surfactant | 0.19 |
| Water | 10 |

at 50°C, followed by addition of 0.055 parts of t-butyl hydroperoxide and 0.036 parts of isoascorbic acid (as 5% aqueous solutions). The reaction exothermed to 59°C. A second addition of similar amounts of initiator was made in 15 minutes. The resulting solids content was 60.3%.

The calculated glass temperature of the outer phase was +4°C. and of the first phase was -47°C.

## EXAMPLE 10 (INVENTION)

The latex of Example 8(391.5 grams at 61% solids) was treated with the outer phase monomer mix in the proportions and amounts of Example 9.

## EXAMPLE 11:

This example compares the properties of the polymers of Examples 7 to 10 to illustrate the improved balance of properties imparted by the final harder phase.

| Example | Phase II, % | Phase Soluble III, % (%) | Swelling Fraction | Tensile Ratio (kg/cm$^2$) | Elongation Strength (%) |
|---------|-------------|--------------------------|-------------------|---------------------------|--------------------------|
| 7 (Comp) | 0 | 0 | 93 | a | 1.5 | 1717 |
| 8 (Comp) | 3 | 0 | 37 | 22 | 5.9 | 910 |
| 9 (Comp) | 0 | 15 | 75 | 67 | 13.6 | 1882 |
| 10 (Inv) | 3 | 15 | 34 | 20 | 26.7 | 1200 |

These data show improved tensile strength and an improved balance of properties. No Tg was measured for these examples.

## EXAMPLE 12 (INVENTION)

The following example illustrates the roof mastic formulation used in testing the three-phase polymers of the present invention. This formulation has a lower pigment concentration than might be commercially used, but is a good screening formulation for determining whether the distinguishing effects seen for the multi-phase polymers continue to be realized in formulated systems.

## Roof Mastic Formulation

| Component | kg |
|---|---|
| Water | 72.64 |
| Hydroxyethyl cellulose (1) (Natrosol 250 MXR) | 2.04 |
| Pigment dispersant, Tamol 850, 30% aq. | 0.6 |
| Ethylene glycol | 11.35 |
| Defoamer (Nopco NXZ) (8) | 0.91 |
| Potassium tripolyphosphate (pigment dispersant) | 0.18 |
| $TiO_2$ (TiPure R-960 whitener) (3) | 20.88 |
| $CaCO_3$(Camel Wite extender) (4) | 29.06 |
| Zinc oxide (Kadox 515 whitener) (5) | 14.07 |

The above components are ground for 20 minutes on a high speed disperser (Cowles) and the following components are added:

| | |
|---|---|
| Latex polymer | 234.3 |
| Coalescent (Texanol) (6) | 3.31 |
| Mildewcide (Skane M-8) (7) | 1.0 |
| Defoamer (Nopco NXZ) (8) $NH_4OH$ (28% NH3) (adjust to pH 9 - 9.5) | 0.91 |
| Water | 9.08 |

_____

1. Natrosol is a trademark of Hercules, Inc. of Wilmington, DE.

2. Tamol is a trademark of Rohm and Haas Company. Tamol 850 is the sodium salt of a polymeric acid surfactant type dispersant

14

3. TiPure is a trademark of duPont deNemours Co., Wilmington, DE.

4. Camel Wite is a trademark of Harry T. Campbell Sons Corp. of Towson, MD.

5. Kadox is a registered trademark of New Jersey Zinc, Bethlehem, PA.

6. Texanol is a registered trademark of Eastman Kodak Co., Rochester, NY. This coalescent is 2,2,4-trimethyl-1,3-pentanediol monoisobutyrate.

7. Skane M-8 is a trademark of Rohm and Haas Company. It is a biocide for control of algae in emulsions and mildew in paints and mastics, and is a solution in propylene glycol of 2-n octylisothiazolone.

8. Nopco is a registered trademark of Diamond Shamrock Corporation.

The mix is then ground for an additional 15 minutes. The pigment to binder ratio is 1.00.

The mechanical properties of films of cured roof mastic are evaluated by casting a film on a TEFLON (trademark of duPont deNemours) coated glass plate to yield a dry film with a thickness of 0.05 cm. The cast mastic is allowed to dry for 3 weeks at 22∞C and 50% relative humidity. When cure is complete, test specimens are cut from the film using the dumbbell shaped die (7.62 cm long x 1.91 cm wide with neck width of 0.64 cm) used in preparing polymer free film test specimens described above. An Instron Tensile Tester is used to measure the mechanical properties.

## EXAMPLE 13 - 20

These examples illustrate the improvements in polymer properties in a formulated mastics when the three-phase technology with an outer shell is employed. The same core and inclusion level was utilized, but the level of shell was varied from 0 to 25% based on the core composition. A further control was a core wherein all monomers of both core and shell (15% by weight of core) were polymerized into the core, followed by preparation of the inclusions.

| Formulated Mechanical Properties | | | | |
|---|---|---|---|---|
| Experiment | RoomTemperature -17.8° C | | | |
| | Tensile, kg/cm$^2$ | Elongation, % | Tensile, kg/cm$^2$ | Elongation % |
| 13 Core,noshell(Comp) | 37.1 | 1223 | 100.73 | 499 |
| 14 Core//shell,5%(Inv) | 44.1 | 1041 | 116.6 | 528 |
| 15 Core//shell, 10% (Inv) | 48.6 | 899 | 117.8 | . 424 |
| 16 Core//shell, 15% (Inv) | 55.9 | 726 | 161.3 | 296 |
| 17 Core//shell, 25% (Inv) | 61.3 | 586 | 143.5 | 235 |
| 18 Core plus 15% shell as copolymer(a) (Comp) | 40.9 | 475 | 124.8 | 303 |
| 19 Core//shell, 15% (Inv) | 20.9 (b) | 1152 (b) | | |
| 20 Core plus 15% shell as copolymer(a) (Comp) | 3.3 (b) | 780 (b) | | |
| Core: 97 (91.6 butyl acrylate/ 7 acrylonitrile/ 1.4 acrylic acid)// 3 (butylene glycol dimethacrylate, polymerized as in Example 1.  Shell: 50 butyl acrylate/ 44 methyl methacrylate/ 5 methacrylic acid/ 1.0 ureido monomer, polymerized onto shell as in Example 9. | | | | |

(a) All monomers except dimethacrylate polymerized as in a core preparation of Example 1.
(b) Test numbers are on binder alone, isolated as in Example z. Elongation testing was at 0.05 meters/second.

## EXAMPLE 21

A formulation useful for comparing the polymers as caulks is as follows (parts by weight):

| | |
|---|---|
| Polymer | 500 |
| Proxel CRL algicide | 0.12 |
| Triton X-405 surfactant | 21 |
| Ethylene glycol | 5.4 |
| Natrosol 250MXR hydroethyl cellulose thickener | 5.4 |
| Sodium zinc hexametaphosphate | 6.3 |
| Tamol 850 salt of a polymeric acid | 1.8 |
| Camel Tex | 454 |
| Titanium dioxide, R 901 | 14.6 |
| Varsol #1 hydrocarbon | 9.2 |
| Silane Z 6040 | 0.4 |

The ingredients were mixed in a Sigma mill for 1.5 hours, then deaerated under house vacuum for 5 minutes. They were added in the order shown above. Nopco NXZ (<0.5 parts) was added just before deaeration to lower foaming.

Caulks were cast as in the mastic formulation above. Elongation to 400% original was followed by a measure of return after 1 minute and 5 minutes. Modulus at maximum and minimum elongation was determined to evaluate strain hardening.

## EXAMPLES 22-28

## EXAMPLE 22 (COMPARATIVE)

A first-phase polymer of 90.6 parts butyl acrylate, 7 parts acrylonitrile, 1.4 parts acrylic acid, and 1 part of an ureido monomer is prepared. The latex (97 parts solids) was then swollen with 3 parts butylene glycol dimethacrylate, and that monomer then polymerized to form domains.

## EXAMPLE 23 (COMPARATIVE)

A similar latex to that shown in Example 22, but without the ureido monomer, composed of butyl acrylate 91.35/ acrylonitrile 7/ methacrylic acid 1.65, was swollen with 5 parts of butylene glycol dimethacrylate, and that monomer then polymerized to form domains.

## EXAMPLE 24 (COMPARATIVE)

A separate emulsion polymerization was conducted of butyl acrylate 50 parts, methyl methacrylate 46.5 parts, methacrylic acid 2.5 parts, ureido monomer 1.0 parts.

## EXAMPLE 25-26 (INVENTION)

In the presence of 85 parts of the polymers of Examples 22 and 23 was polymerized 15 parts of the same monomer mix used in Example 24. The resulting three-phase polymers were Examples 25 and 26, respectively.

## EXAMPLE 27-28 (COMPARATIVES)

Physical blends of Examples 22 and 23(85 parts, solids) with Example 24(15 parts, solids) were prepared as Examples 27 and 28.

## COMPARISON

Latices from Examples 22, 23, 25, 26, 27, and 28 were isolated and film properties measured.

| Polymer | Tensile strength kg/cm², 22 °C | Elongation, %,22 °C | Tensile, Strength, kg/cm², -18 °C | Elongation, %,-18 °C |
|---|---|---|---|---|
| 22 (Comp ) | 7.7 | 1150 | 63.7 | 874 |
| 25 (Inv) | 21.8 | 1093 | 95.2 | 570 |
| 27 (Comp) | 7.7 | 910 | --- | --- |
| 23 (Comp) | 11.7 | 598 | 106.0 | 841 |
| 26 (Inv) | 41.4 | 612 | 148.1 | 507 |
| 28 (Comp) | 17.6 | 690 | --- | --- |

In general, the three-phase polymers of the present invention in caulk formulations showed the expected higher modulus, but did not show improvement (or decrease) in recovery or in strain hardening.

EXAMPLES 29- 34

In the following series, the compositions of the final phase were varied. In all cases, a first phase polymer was prepared by gradual addition polymerization of the composition 91.6 butyl acrylate/ 7 acrylonitrile/ 1.4 acrylic. This polymer (97 parts) was then swollen and polymerized with 5 parts of butylene glycol dimethacrylate. The resulting two-phase polymer is Example 29. (Comparative)

Onto 85 parts solids of Example 29 were polymerized 15 parts of various compositional variations. The glass temperatures of these final phases were calculated from the Fox equation:

$$1/T_g(\text{copolymer}) = w_1/T_{g1} + w_2/T_{g2},$$

where $w_1$ is the weight fraction of monomer 1, $w_2$ the weight fraction of monomer 2, $T_{g1}$ the glass temperature for the homopolymer of monomer 1, and $T_{g2}$ the glass temperature for the homopolymer of monomer 2. For these calculations, $T_g$ for the homopolymers was taken as:

| methyl methacrylate | +105° |
|---|---|
| ethyl acrylate | -22 |
| butyl acrylate | -54 |
| phenoxyethyl acrylate | 0 |

All other phase polymers also contained 2.5 parts of methacrylic acid and 1.0 parts of an ureido monomer. In Example 23, ethyl acrylate replaced butyl acrylate.

TABLE

| TENSILE STRENGTH AND ELONGATION AS A FUNCTION OF OUTER PHASE GLASS TEMPERATURE | | | | | | |
|---|---|---|---|---|---|---|
| Example | Outer BA | Phase, MMA | wt % POEMA | Tg,°C (calc.) | Tensile Strength, kg/cm² | Elongation, % |
| 29 (Comp) | -- | --- | ----- | -- | 13.5 | 655 |
| 30 (Inv) | 20 | 61.5 | 15 | +45 | 35.5 | 446 |
| 31 (Inv) | 45 | 36.5 | 15 | 0 | 29.1 | 680 |
| 32 (Inv) | 57 | 24.5 | 15 | -20 | 23.0 | 575 |
| 33 (Inv) | 81.5* | -- | 15 | -20 | 20.1 | 550 |
| 34 (Inv) | 81.5 | -- | 15 | -40 | 15.6 | 486 |

In Example 33, ethyl acrylate was employed instead of butyl acrylate.

While the invention has been described with reference to specific examples and applications, other modifications and uses for the invention will be apparent to those skilled in the art without departing from the spirit and scope of the invention defined in the appended claims.

**Claims**

1. Polymeric composition comprising

(a) a linear, or lightly crosslinked, polymeric phase, formed from at least one $\alpha,\beta$-ethylenically unsaturated monomer of which no more than two percent by weight is multi-ethylenically unsaturated monomer, and

(b) a further polymeric phase in the form of discrete domains of from 2 to 50 nanometers in diameter dispersed within phase, (a), said further phase comprising polymer comprising units of at least one ethylenically unsaturated monomer which itself comprises at least 5, preferably at least 50 and more preferably 100 percent by weight of monomer having at least two sites of ethylenic unsaturation, the weight ratio of solids in said further phase to total solids in both phases being from 1:100 to 1:2; characterised in that

(c) the composition also contains subsequent polymeric phase which is thermoplastic and has a glass transition temperature higher than that of phase (a) and at least a portion of which subsequent phase is intimately attached to at least one of phases (a) and (b).

2. Process for the preparation of an aqueous dispersion of a water-insoluble latex polymer comprising:

(a) preparing by emulsion polymerisation a water-insoluble polymer of at least one $\alpha,\beta$-ethylenically unsaturated monomer of which no more than two percent by weight is multi-ethylenically unsaturated monomer, the water-insoluble polymer otherwise containing substantially no sites of ethylenic unsaturation,

(b) dispersing in said water-insoluble polymer further monomer, comprising ethylenically unsaturated monomer of which at least five, preferably at least 50 and more preferably 100 weight percent, contains at least two sites of ethylenic unsaturation,

(c) allowing said further monomer to swell the water-insoluble polymer substantially to equilibrium to form a monomer-swollen latex,

(d) polymerising said further monomer within the monomer-swollen latex for form an intermediate latex polymer, wherein the further monomer when polymerised comprises from 1 to 33 weight percent of said intermediate latex polymer;

characterised by

(e) then adding to said intermediate latex polymer $\alpha,\beta$-ethylenically unsaturated monomer containing no more than 0.5 weight percent of multi-ethylenically unsaturated monomer, and polymerising that monomer to form a subsequent polymeric phase having a higher glass transition temperature than that of said water-insoluble polymer, and under conditions such that substantially no new polymer particles are formed, whereby a water-insoluble aqueous polymer dispersion is obtained.

3. Composition according to Claim 1 or process according to Claim 2 wherein the glass transition temperature of said subsequent polymeric phase is from -20°C to +45°C.

4. Composition or process according to any preceding Claim wherein the ethylenically unsaturated monomer of (b) comprises at least 50 percent by weight, preferably at least 80 percent by weight, of monomer having a solubility in water at 20°C of less than than 0.2 g. per 100 g. of water.

5. Composition or process according to any preceding Claim wherein the ethylenically unsaturated monomer of (b) is diacrylate, triacrylate, dimethacrylate preferably 1,3-butylene glycol dimethacrylate.

6. Composition or process according to any preceding Claim wherein the glass transition temperature of the polymeric phase (a) or water-insoluble polymer of step (a) is below 20°C, preferably below -10°C and more preferably below -30°C.

7. Composition or process according to any preceding Claim wherein the polymeric phase (a) or water-insoluble polymer phase (a) comprises:

(i) at least 50 percent by weight, based on the total weight of solids of said polymer phase, of mers comprising $(C_1-C_{12})$alkyl esters of acrylic and/or methacrylic acid;

(ii) from 0 to 10 percent by weight of mers of at least one of acrylic acid, methacrylic acid, itaconic acid, $\beta$-acryloxypropionic acid, or higher oligomers of acrylic acid;

(iii) from 0 to 2 percent by weight of mers of multi-ethylenically unsaturated monomer preferably allyl methacrylate;

(iv) from 0 to 50 percent by weight of mers of at least one of vinyl esters of saturated acids, vinyl aromatics, acrylonitrile or methacrylonitrile.

8. Composition or process according to any preceding Claim, wherein the weight ratio of solids of said thermoplastic phase (c) or $\alpha,\beta$-ethylenically unsaturated monomer of (e) to total solids is from 1:100 to about 1:2, preferably from 1:100 to 1:6.

9. Composition or process according to Claim 8, wherein the thermoplastic phase (c) or $\alpha,\beta$-ethylenically unsaturated monomer of (e) comprises at least 50 percent mers of $(C_1-C_4)$alkyl methacrylate, preferably at least 80% of methyl methacrylate.

10. Process according to any of Claims 2 to 9 further comprising the step of treating the water-insoluble aqueous dispersion by an evaporative or coagulative or dewatering process to form a solid polymer composition.

11. A thermoplastic elastomer gumstock, moulding composition, extruded polymeric sheet or roll roofing formed therefrom, toughened or dirt-pickup resistant roof mastic composition, toughened adhesive, or toughened basecoat for leather, each comprising a composition according to Claim 1 or any of Claims 3 to 9.

12. A toughened polymeric binder for coatings comprising a composition according to Claim 1, or any of Claims 3 to 9, further comprising plasticizer sufficient to reduce the glass transition temperature of said polymeric composition to below, preferably at least 5°C below, that of the temperature of application of the coating.

13. A process for preparing a cellular foam coating or moulded article comprising

(1) foaming a composition comprising an aqueous dispersion of a composition according to Claim 1 or any of Claims 3 to 9, up to 200 percent by weight of inorganic filler, based on the weight of solids of said composition, and optional thickener, surfactant and foam stabilizer,

(2) drying said formed composition.